# EUROPÄISCHE PATENTANMELDUNG

(11) **EP 1 211 880 A2**
(43) Veröffentlichungstag der Anmeldung: **05.06.2002**
(21) Anmeldenummer: 01128853.7
(22) Anmeldetag: 04.12.2001
(51) Int. Cl.: H04M 15/00

(54) **Verfahren und Vorrichtung zur Ermittlung des Abrechnungspreises bei Telekommunikationsdienstleistungen**

(30) Priorität: 04.12.2000 DE 10060184
(71) Anmelder: MSI Telesolutions Aktiengesellschaft, 81379 München (DE)
(72) Erfinder: Weise, Axel, 81479 München (DE)
(74) Vertreter: Alber, Norbert, Dipl.-Ing.

(57) **Zusammenfassung**

Bei den Nutzem von Telekommunikations-Dienstleistungen wird häufig eine interne Zuordnung der Kosten dieser Dienstleistungen zu den einzelnen, internen Verursachern benötigt, obwohl für diese Dienstleistungen unterschiedliche Telekommunikations-Dienstleister sowohl unterschiedliche Übermittlungsarten und Übermittlungswege (zum Beispiel analoge Festnetz-Telefonie einerseits und Internet-Dienste andererseits) benutzt werden. Dies wird ermöglicht, indem für die einzelnen Verbindungen sowohl die verbrauchsrelevanten Parameter als auch die zugehörigen tarifrelevanten Parameter, die auf einen zwischen dem Kunden und dem Anbieten der Dienstleistung bestehenden Tarifvertrag zurückgehen, erfasst und verknüpft werden und dabei für die einzelnen Verbindungen wenigstens Indizien, besser konkrete Parameter, hinsichtlich des benutzten Anbieters der Telekommunikations-Dienstleistung ermittelt werden und auch die verbrauchsrelevanten Parameter im jeweiligen genutzten Übertragungsweg so nahe wie möglich am Kunden ermittelt werden, vor allem um diese Parameter zu ermitteln, bevor sie dem Einfluss des Dienstleistungs-Anbieters unterworfen waren.

## Beschreibung

Im gleichen Maß, in dem sich die technischen Kommunikationsmöglichkeiten mittels Festnetztelefonie, drahtloser Telefonie (Mobilfunk), Internetnutzung, Breitband-Datenübertragung etc. verbessert haben, sind auch die damit verbundenen Kosten der Kommunikationstechnik vom untergeordneten Fixkostenfaktor in die Größenordnung eines Produktivfaktors gestiegen.

Entsprechend besteht vor allem bei Firmen ein immer stärkeres Bedürfnis, auch bei Telekommunikationskosten ein effizientes Controlling durchzuführen, und dabei
- die Richtigkeit der dem Kunden vom Telekommunikationsdienstleistungs-Anbieter in Rechnung gestellten Beträge nachzuprüfen,
- firmenintem diese Kosten dem jeweiligen Verursacher zuzuordnen,
- statistisch auswertbare Telekommunikationsdaten, insbesondere verbrauchsrelevante Parameter, zu erhalten für die Planung zukünftiger TK-Anlagen bzw. deren Erweiterung und
- um Betrug im Telekommunikations-Sektor durch eigene Mitarbeiter des Kunden oder externe Personen zu vermeiden bzw. aufzudecken.

Heute sieht dies in der Regel so aus, daß die mittels der Festnetz-Telekommunikationsanlage des Kunden (die sowohl drahtgebundene als aus drahtlose Endgeräte umfassen kann) verursachten Kosten, wenigstens hinsichtlich der verbrauchsrelevanten Kosten, bereits den einzelnen Verursachern innerhalb der Firma zugeordnet werden. Als Verursacher können Kostenstellen, einzelne Mitarbeiter, projektbezogene Arbeitsgruppen, Abteilungen oder auch einzelne Endgeräte definiert werden.

Die mittels Mobilfunk-Geräten der einzelnen Mitarbeiter ausgelösten Kosten können dagegen in der Regel nur pauschal dem entsprechenden Mitarbeiter bzw. der Kostenstelle, welcher er angehört, zugeordnet werden. Eine weitere Unterteilung nach Projekten, unterschiedlichen Auftraggebern etc. ist ebenso wie die Ermittlung der privat verursachten TKD-Kosten dieses Mobilfunkgerätes nur mittels Handarbeit (manuelles Durchsehen und Zuordnen von Einzelverbindungsnachweisen in Listenform) möglich. Dies ist sehr zeitaufwendig, fehlerintensiv und kaum auf Richtigkeit nachprüfbar.

Die weiter ansteigenden Kosten paketorientierter Datenübertragungen, beispielsweise in oder aus dem Internet, sind heute nur dann den einzelnen Verursachern zuordenbar, wenn diese Verursacher jeweils über separate Internetzugänge verfügen. Um eine schnelle Datenübertragungsrate zu gewährleisten und aus Gründen der Übertragungs- und Zugangssicherheit, verfügen Firmen jedoch in aller Regel über zentrale Internetzugänge, wodurch eine Zuordnung zum Verursacher verhindert wird.

Auch eine Nachkontrolle der für derartige Telekommunikations-Dienstleistungen (TK-Ds) in Rechnung gestellten Beträge ist bisher kaum möglich.

Es ist daher die Aufgabe der vorliegenden Erfindung, ein Verfahren sowie eine Vorrichtung zu dessen Durchführung zu schaffen, welches die automatische simulative Berechnung und insbesondere die interne Verursacher bezogene Zuordnung des gesamten Abrechnungspreises der von einem Kunden bei wenigstens einem Anbieter in Anspruch genommenen Telekommunikations-Dienstleistungen unterschiedlicher Übermittlungsarten und Übermittlungswege zu ermöglichen.

Diese Aufgabe wird durch die Merkmale der Ansprüche 1 und 13 gelöst.

Für am Festnetz hängende Telekommunikations-Anlagen ist es bereits bekannt, direkt an der TK-Anlage mittels einer Meßeinheit die verbrauchsrelevanten Parameter hinsichtlich der Verbindungskosten beim Kunden zu ermitteln und mittels eines Rechners mit den tarifrelevanten Parametern des benutzten Anbieters zu verknüpfen.

Als verbrauchsrelevante Parameter werden dabei primär
- Zeitpunkt und Dauer,
- verantwortliche Nebenstelle der TK-Anlage,
- wenigstens das Ziel-Ortsnetz, insbesondere die Ziel-Rufnummer, und
- wenigstens Indizien hinsichtlich des benutzten Anbieters der in Anspruch genommenen TK-D
ermittelt.

Die Ermittlung dieser Daten ist möglich an der Zentraleinheit (PBX) einer am Festnetz hängenden Telekommunikationsanlage, über die alle Verbindungen laufen müssen und an welcher diese Daten erfaßt werden können.

Die leitungs-gebundenen Telefonanlagen umfassen dabei auch die drahtlosen Endgeräte, die jedoch nur eine geringe Reichweite von maximal einigen 100 Metern gegenüber ihren Basisstationen besitzen.

Bei den sogenannten nicht leitungsgebundenen Telekommunikations-Dienstleistungen, also insbesondere der Abwicklung über zum Beispiel Mobilfunkgeräte, die auch als Teil der TK-Anlage betrachtet werden, und die eine große Reichweite besitzen (Handys), müssen verbrauchsrelevante Parameter anders beschafft werden:

Entweder wird hierfür - vorzugsweise automatisch, beispielsweise über Internet-Verbindung - auf die vom TK-Anbieter für den Kunden erstellten elektronischen Verbindungsnachweise (EVNs) zugegriffen, die bereits aufbereitete verbrauchsrelevante Parameter sind. Auf die ursächlichen verbrauchsrelevanten Parameter, die Call-Detail-Records, die vom Anbieter an dessen Switches und Clustern erfaßt erfaßt werden, kann in der Regel nicht zugegriffen werden, da diese erst nach Durchführung einer sogenannten Mediation (Abgleich und Komprimierung) als Datenmaterial zur Verfügung stehen, und bei denen in der Regel jeder Datensatz einer einzelnen Verbindung entspricht.

Um bei der Ermittlung der verbrauchsrelevanten Parameter möglichst bzw. völlig unabhängig vom TKD-Anbieter zu sein, besteht die zweite und bevorzugte Möglichkeit darin, im nicht leitungsgebundenen Teil der TK-Anlage, etwa im Mobilfunkgerät, selbst die verbrauchsrelevanten Parameter, die den bei Festnetz-Anlagen ermittelten Parametern hinsichtlich der Struktur analog sein sollen, zu erfassen und an den Speicher für verbrauchsrelevante Parameter der Simulationsvorrichtung, welcher insbesondere an oder nahe an der Festnetz-Telekommunikationsanlage des Kunden installiert ist, zu übermitteln.

Insbesondere sollte der Abgriff der verbrauchsrelevanten Parameter innerhalb der Firewall, also auf der kundenseitigen Seite der Firewall, erfolgen, Die Firewall besteht in der Regel aus einem PC oder Server, auf dem einProgramm Iläuft, welches bewirkt, daß datenmässig von einem externen Standpunkt aus nur diese Firewall und nicht die intern und bis zur FIREWALL laufenden Datenströme zu sehen sind.

Hierfür ist insbesondere ein Zwischenspeichern im nicht leitungsgebundenen Endgerät notwendig, um eine vereinfachte, drahtgebundene oder drahtlose, Übermittlung über kurze Entfernungen zu ermöglichen, wenn sich das Endgerät an oder nahe bei der Simulationsvorrichtung, also im Hause des Kunden, befindet.

Sofern der Kunde statt der Nutzung der Funknetze von TKD-Anbietern für nicht leitungsgebundene TKDs eine eigene Funkzentrale betreibt, können - wiederum bevorzugt gegenüber der Abnahme an Einzelgeräten - auch hier verbrauchsrelevante Parameter ermittelt werden, was jedoch in der Regel nicht gegeben ist.

Sofern man bei den vorbeschriebenen nicht leitungsgebundenen TKDs zum Beschaffen der verbrauchsrelevanten Parameter ohnehin die EVNs der Anbieter benutzt, kann dies auch für die leitungsgebundenen TKDs, also zum Beispiel die Festnetztelefonie, benutzt werden, was die Anzahl der Formate und gegebenenfalls auch Quellen der Daten für verbrauchsrelevante Parameter reduziert.

Bei der vorbeschriebenen Sprachübertragung mittels herkömmlicher Telefonie im Festnetz oder mittels Mobilfunk erfolgt die Datenübertragung verbindungsorientiert, die Verbrauchskosten hängen also primär von Art, Zeitpunkt und Dauer der gewählten Verbindung ab.

Im Gegensatz dazu erfolgt beispielsweise die Datenübertragung nach dem Internet-Protokoll (IP) oder nach dem gegen Datenverluste abgesicherten Transmission-Control-Protokoll (TCP) und/oder nach dem File-Transfer-Protokoll (FTP) primär paketorientiert. Beide Protokoll-Arten werden im Internet als auch für die Kommunikation mit dem Internet benutzt und können auch ausserhalb des Internets, z.B. in einem Computernetz des Kunden, welches auch Teil einer TK-Anlage sein kann, verwendet werden. Gleiches gilt bei speziellen Datenübertragungswegen wie Breitband-Datenübertragung und ähnlichem.

Speziell bei der Internet-Nutzung fallen dabei zwei getrennte Kostenblöcke an:
- Verbrauchskosten bedingt durch die Telekommunikationsverbindung zum Internet, also bezogen auf die Verbindung (paketorientierte Verbindungskosten) und
- Verbrauchskosten bedingt durch die per Pakete übertragenen Daten, also bezogen auf die während der Verbindung übertragenen Daten (paketorientierte Datenkosten).

Letztere können neben der
- Anzahl von Paketen auch abhängen von der Art des benutzten Dienstes (eMail, Internet etc.) und auch
- von der Art der Daten, die während einer Verbindung übertragen werden, die mittels der Pakete übermittelt werden (Unterhaltung, geschäftliche Daten; Art und Umfang der Komprimierung etc.)

Aus dem Kontext jedes einzelnen Paketes müssen daher wenigstens
- die Absenderadresse (Quelladresse) und
- die Zieladresse sowie
- die Paketgröße
ermittelt werden, sowie vorzugsweise
- Zeitpunkt und
- Dauer der Paketübermittlung sowie
- die Diensteart (Ortsverbindung, Fernverbindung, ATTP-Einwahl etc.) sowie
- vorzugsweise wenigstens Indizien hinsichtlich der Art der im Paket enthaltenen Daten.

Bei entsprechender Hinterlegung von zeitlichen Grenzen, örtlichen Grenzen und gegebenenfalls weiteren Angaben ist die weitere Aufschlüsselung in dienstlich oder privat, in unterschiedliche Projekte oder Auftraggeber etc. aus diesen Daten heraus möglich.

Zu diesem Zweck muß einerseits die interne Organisationsstruktur des Kunden, also der zu betrachtenden Firma, hinsichtlich der Telekommunikations-Endgeräte, zu denen auch Computer mit Internet-Anschluß, beispielsweise über IP-Server oder Router oder Einsteckkarten in der PBX einer TK-Anlage zählen, hinsichtlich der Zuordnung zu den gewünschten Verursachern abgebildet sein.

Die Zuordnung kann dabei mehrschichtig, also sowohl vertikal als auch horizontal, sein.

Ein vertikale Zuordnung wäre eine bestimmte Abteilung als erste Verursacherstufe, ein bestimmter Mitarbeiter dieser Abteilung mit seinem Festnetz-Telefonapparat, seinem Mobilfunkgerät und seinem PC mit Internet-Anschluß als sekundärer Verursacher, die unterschiedlichen Projekte bzw. Auftraggeber an bzw. für die dieser Mitarbeiter arbeitet, beispielsweise vorgegeben durch bestimmte zeitliche Unterteilungen oder manuell jeweils vom Mitarbeiter bei Benutzung der TKD durch Kennzahlen angegeben, die tertiäre Verursacherzuordnung.

Beispiel für eine horizontale Unterteilung ist die Unterscheidung in dienstliche und private Nutzung, die ebenfalls manuell vom Benutzung eingegeben werden kann oder durch zeitliche Grenzen vorgegeben sein kann (z. B. jede Handy-Benutzung nach 18 Uhr wird grundsätzlich als privat eingestuft).

Da eine durchgängige IP-Verbindung, in deren Verlauf z.B. ein Aufruf unterschiedlicher Internet-Seiten erfolgte, auch unterschiedlichen Verursachern zuordenbar sein soll, müssen die einzelnen übermittelten Pakete, deren Übermittlung einem gemeinsamen Zweck diente, zu einem sogenannten Flow zusammengestellt werden. Eine Internet-Verbindung mit mehreren nacheinander aufgerufenen Internet-Seiten oder dabei getätigter Daten-Transfers, sogar ein einzelner Datentransfer, können sich aus mehreren Flows zusammensetzen, die jeweils wieder aus einzelnen Paketen von Daten bestehen. Zu diesem Zweck wird die Zusammengehörigkeit von Paketen zu einem Flow bejaht, wenn einerseits Absenderadresse und Zieladresse jeweils identisch sind, und andererseits die Übermittlungszeiträume der Pakete zeitlich so aneinander anschließen, daß die dazwischen aufgetretene Lücke unter einem vorgegebenen Maximalwert liegt.

Pakete, die nicht zusammengehören, also keinen gemeinsamen Flow bilden, nehmen in der Regel einen größeren zeitlichen Abstand zueinander ein.

Unter Absenderadresse und Zieladresse ist dabei die jeweilige Domain-Bezeichnung, also Adresse nach dem Internet-Protokoll, zu verstehen. Eine Unterscheidung zwischen einzelnen Unter-Seiten der Hauptseite im Internet ist darüber in der Regel nicht möglich, sondern kann entweder aus der zeitlichen Zughörigkeit zu unterschiedlichen Flows erkannt werden, oder durch Unterscheidung der Diensteart bzw. der Art des Inhalts des Paketes (z.B. durch Analyse der Proxylock-files).

Die vorbeschriebenen paketorientierten verbrauchsrelevanten Parameter werden entweder im IP-Server des Kunden abgenommen und der Simulationsvorrichtung zugeführt, oder - bei Verbindung von Festnetz-Telefonanlage mit dem hauseigenen Computernetz von der entsprechenden Einsteckkarte der PBX der TK-Anlage abgenommen oder - als dritte Möglichkeit - im auf das Internet-Protokoll gestützten Teil der TK-Anlage durch eigene Meßeinheit ermittelt, also abgenommen oder gemessen.

Eine solche IP-Messeinheit sollte sich möglichst nah am übergang zwischen dem IP-gestüzten und dem nicht-IP-gestützten Teil der TK-D befinden, da alle unter dem IP-Protokoll laufenden Datenströme über diese IP-Messeinheit laufen sollen.

Diese Ermittlung setzt vorzugsweise auf den frei verfügbaren RFC-Standard 2063 und/oder 2064 als Datenformat auf, durch den bereits eine rückwirkende Einanderzuordnung einzelner Pakete zu kompletten Flows möglich ist, umfasst jedoch gegenüber dem RFC zusätzliche Funktionen, wie anhand der Figuren beschrieben werden wird.

Eigene Meßvorrichtungen unter dem IP-Protokoll werden nur dann verwendet wenn andere diesbezüglich verwendbare Datenquellen und Meßvorrichtungen an der TK-Anlage nicht bereits vorhanden sind.

Eine Simulationsvorrichtung zur automatischen simulativen Berechnung des gesamten Abrechnungspreises von unterschiedlichen Telekommunikationsdienstleistungen eines Kunden umfaßt somit im Rahmen der beim Kunden vorhandenen TK-Anlage
- neben dem leitungsgebundenen, Teil der Telekommunikationsanlage samt allen leitungsgebundenen Endgeräten wie
   - leitungsgebundenen Internetanschlüssen und
   - leitungsgebundenen Telefonapparaten
- auch die nicht leitungsgebundenen Endgeräte wie
   - schnurlose Endgeräte der leitungsgebundenen Telekommunikationsanlage für kurze Entfernungen und
   - Mobilfunkgeräte für lange Entfernungen und
   - nicht leitungsgebundene Internetanschlüsse, beispielsweise realisiert über derartige Mobilfunkgeräte, als auch einen
- leitungsgebundenen, aber dem Internetprotokoll unterliegenden Teil der Telekommunikationsanlage, beispielsweise ein mit der TK-Anlage verbundenes Computernetz oder auch einzelne damit verbundene Computer.

Der Übertragungsweg (leitungsgebunden oder nicht leitungsgebunden) und die Übertragungsart (verbindungsorientiert oder paketorientiert, wie beispielsweise gemäß dem Internetprotokoll) stehen nicht in einem direkten Zusammenhang zueinander. Es wird zwar beim Übertragungsweg versucht, soweit als möglich leitungsgebunden zu arbeiten, da dies weniger störanfällig ist und höhere Übertragungsraten zuläßt, was vor allem für die paketorientierte Übertragung nach dem Internetprotokoll von Vorteil ist, da dort häufig große Datenmengen übertragen werden sollen, dies ist jedoch nur eine bevorzugte und keine zwingende Zuordnung.

Darüber hinaus umfaßt die Simulationsvorrichtung Speichereinheiten zur Speicherung der tarifrelevanten als auch der verbrauchsrelevanten Parameter, einen Rechner zur Verknüpfung der beiden Parameter sowie eine Ausgabeeinheit.

Ermittelt werden die verbrauchsrelevanten Parameter mittels einer diesbezüglichen Meßeinheit, und diese Meßeinheit muß natürlich mit einer Verbindungsvorrichtung mit dem Rechner in Verbindung bringbar sein.

Die Meßeinheit kann eine oder auch mehrere Meßvorrichtungen umfassen, deren Zweck und Wirkungsweise von der vorhandenen Peripherie abhängt:

Eine erste Meßvorrichtung, die vorzugsweise im Rechner, vorzugsweise der zur Durchführung der Simulation vorhanden ist, angeordnet ist, oder auch in der TK-Anlage selbst, ist in der Lage, automatisch mit dem beim Anbieter der TKD vorhandenen Speicher Verbindung aufzunehmen, und die dort abgelegten elektronischen Verbindungsnachweise betreffend den Kunden zu übernehmen.

Eine solche erste Meßvorrichtung ist sinnvoll, wenn der Anbieter Zugriff auf seine EVNs gewährt. Bei den EVNs kann es sich um solche für nicht leitungsgebundene Endgeräte wie etwa Handys handeln oder auch um solche des leitungsgebundenen Teiles der TK-Anlage.

Ferner kann eine zweite Meßvorrichtung direkt an dem jeweiligen Endgerät der TK-Anlage vorhanden sein, um die Erfassung und Zwischenspeicherung der verbrauchsrelevanten Parameter bezüglich der von diesem Endgerät aus geführten Telefonate oder Datenverbindungen. Eine solche Meßvorrichtung ist vor allem sinnvoll bei nicht leitungsgebundenen Endgeräten wie Mobilfunkgeräten, und würde diesbezüglich den Zugriff auf die entsprechenden EVNs des TKD-Anbieters überflüssig machen.

Aus einem solchen Speicher z. B. eines Mobilfunkgerätes würden die Daten entweder bei einem gewissen Füllungsgrad über den normalen, nicht leitungsgebundenen Kommunikationsweg, den dieses Endgerät benutzt, zum zentralen Speicher für verbrauchsrelevante Daten weitergegeben werden. Diese Datenübernahme kann statt dessen auch in bestimmten festgelegten zeitlichen Abständen erfolgen oder auch nur dann, wenn sich das nicht leitungsgebundene Endgerät nahe an bzw. in Leitungsverbindung mit der TK-Anlage befindet, beispielsweise in einer Basisstation oder Ladestation für den Akku des Endgerätes.

Wenn über dieses insbesondere nicht leitungsgebundene Endgerät paketorientierte Verbindungen hergestellt werden, müßte eine derartige zweite Meßvorrichtung sowohl die diesbezüglichen Verbindungskosten als auch die diesbezüglichen Datenkosten in Form von einschlägigen verbrauchsrelevanten Parametern erfassen und speichern.

Weiterhin kann eine dritte Meßvorrichtung vorhanden sein, und zwar in dem dem Internetprotokoll unterliegenden Teil der TK-Anlage, also in der Regel einem mit der eigentlichen TK-Anlage gekoppelten Computer oder Computernetz. Eine solche dritte Meßvorrichtung würde die Parameter für die Datenkosten solcher paketorientierter Datenübertragungen, insbesondere nach dem IP-Protokoll, erfassen und speichern in Form von verbrauchsrelevanten einschlägigen Parametern, und gegebenenfalls auch die Verbindungskosten.

Natürlich müssen nicht alle drei Meßvorrichtungen gleichzeitig vorhanden sein:

Wenn beispielsweise die TKD-Anlage des Kunden nur einen leitungsgebundenen Teil mit leitungsgebundenen Endgeräten umfaßt, der also im Festnetz betrieben wird, sowie ein Computernetzwerk, von welchem aus ausschließlich Internetverbindungen herstellbar sind, so ist es ausreichend, daß die Meßvorrichtung aus der bekannten Meßvorrichtung für die Ermittlung verbrauchsrelevanter Parameter in einer leitungsgebundenen, also in der Regel im Festnetz betriebenen, konventionellen, analogen oder digitalen, Telefonanlage besteht. Für die Ermittlung der paketorientierten Übermittlung zwischen dem Computernetzwerk und dem Internet ist die vorbeschriebene dritte Meßvorrichtung notwendig.

Wenn dagegen eine TK-Anlage z. B. keine Computer umfaßt, über die eine Internetverbindung hergestellt werden kann, sondern ausschließlich einerseits einen leitungsgebundenen Teil und zusätzliche nicht leitungsgebundene Endgeräte wie etwa Mobilfunkgeräte, so ist die vorbeschriebene konventionelle Meßvorrichtung für den leitungsgebundenen Teil der TK-Anlage notwendig.

Für die nicht leitungsgebundenen Endgeräte (Mobilfunkgeräte) sind entweder die vorbeschriebenen zweiten Meßvorrichtungen an jedem dieser nicht leitungsgebundenen Endgeräte notwendig oder ersatzweise die erste vorbeschriebene Meßvorrichtung, die den Zugriff auf die EVNs des Anbieters des Netzes für diese Endgeräte herzustellen in der Lage ist.

Ggf. können damit auch die EVNs des leitungsgebundenen Teils der TK-Anlage abgegriffen werden, so daß der konventionelle Teil einer Meßeinheit dann entfallen könnte.

### c) Ausführungsbeispiele

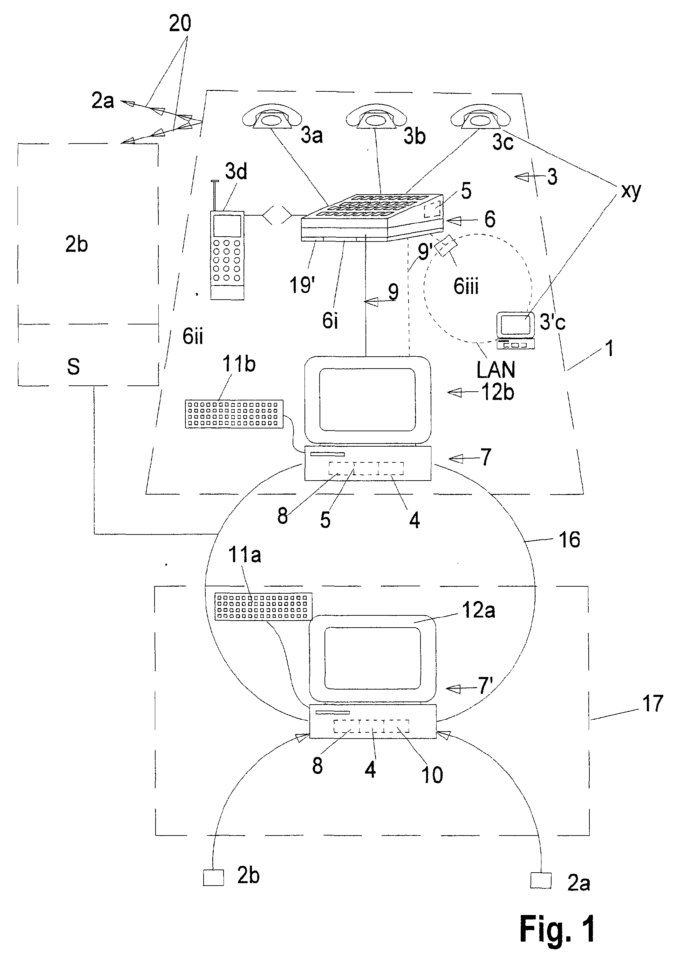

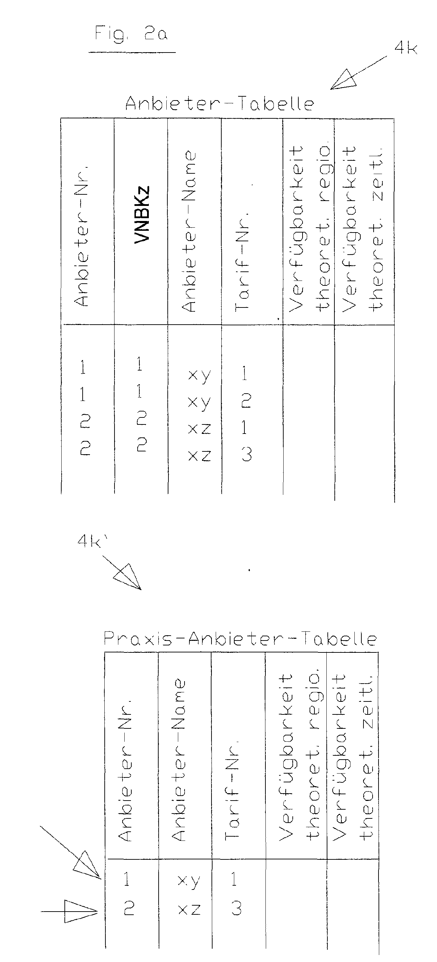

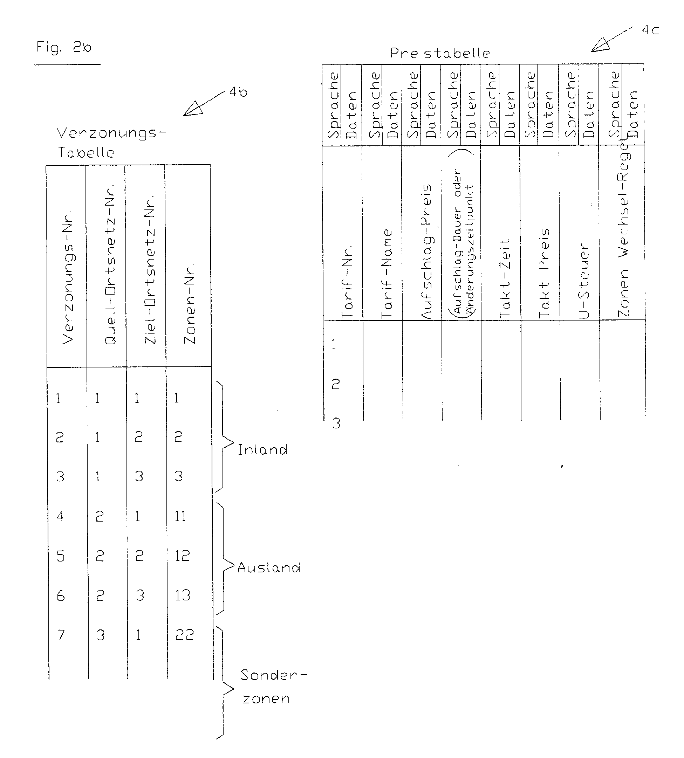

Im folgenden wird eine mit allen drei Meßvorrichtungen ausgestattete TK-Anlage in der Fig. 1 beschrieben. Die Figuren insgesamt zeigen:
- Fig. 1:: eine Prinzipdarstellung der erfindungsgemäßen Vorrichtung,
- Figuren 2:: die Teilspeicher der ersten Speichereinheit 4,
- Fig. 3:: Darstellung eines Stufentarifes, und
- Fig. 4:: Prinzipdarstellung der paketorientierten Übertragung.

Fig. 1 zeigt zunächst die Telekommunikations-Anlage 3, die eine Vielzahl von Telefonapparaten oder anderen Endgeräten 3a,b,c,d umfassen kann.

Die TK-Anlage 3 umfaßt sowohl leitungsgebundene (Telefonapparate 3a, 3b, 3c, Computer 3'c) als auch nicht leitungsgebundene (Mobilfunkgerät 3d), und ebenso sowohl verbindungsorientiert arbeitende (Festnetz-Endgeräte 3a-3c) als auch paketorientiert arbeitende (Internet-fähiges Mobilfunkgerät 3d, mit dem Internet in Verbindung stehender Computer 3'c) Endgeräte.

Dem leistungsgebundenen Teil der TK-Anlage 3 ist eine Messeinheit 6 mit mehreren Meßvorrichtungen 6k, 6i, ... funktional und in der Regel auch örtlich zugeordnet, die an der TK-Anlage 3 alle verbrauchsrelevanten Daten der mittels dieser TK-Anlage 3 geführten, zumindest aktiv geführten, Telefonate und Datenübertragungen aufzeichnet.

Diese verbrauchsrelevanten Daten werden in einer zweiten Speichereinheit 5, die sich vorzugsweise an bzw. in der Telekommunikations-Anlage 3 und/oder der zugeordneten Messeinheit 6 befindet, zwischengespeichert, bis sie für eine Simulationsberechnung benötigt werden.

Die Messeinheit 6 ist über eine Verbindungsvorrichtung 9 mit einem Rechner 7 verbunden, der in der Regel auch über eine Eingabeeinheit 11b, beispielsweise in Form einer Tastatur, und eine Ausgabeeinheit 12b, beispielsweise einen Bildschirm, verfügt, und ebenfalls beim Kunden 1 steht.

Sofern dieser Rechner 7 einerseits mit der ersten Speichereinheit 4 ausgestattet bzw. gekoppelt ist, in welcher die tarifrelevanten Parameter abgelegt sind, und andererseits mit einem Programm 8, welches verbrauchsrelevante Daten und tarifrelevante Daten zwecks Simulationsberechnung verknüpfen kann, ist allein mit Hilfe dieses Rechners 7 bereits die Durchführung der simulativen Berechnung möglich.

Dabei ist auch zu erkennen, daß die zweite Speichereinheit 5, in der die verbrauchsrelevanten Daten zwischengespeichert werden, statt in oder an der TK-Anlage 3 oder der Messeinheit 6 - dann mit zusätzlichem Controller - durchaus auch an oder in dem Rechner 7 angeordnet sein kann, sofern die Verbindungsvorrichtung 9 dazwischen eine permanent offene Datenverbindung ist.

Fig. 1 zeigt ferner, daß der Rechner 7 Bestandteil eines Datennetzes 16, z. B. des Internet, sein kann, in dem sich ein oder mehrere weitere Rechner 7', vorzugsweise wiederum mit Ein- und Ausgabeeinheit 11a und 12a, befinden. Ein solcher Rechner 7' wird dabei vorzugsweise bei der Controlling-Firma 17 stehen, sofern diese Controlling-Firma für die Durchführung der Simulationsberechnung verantwortlich ist. In diesem Fall werden dann auch die erste Speichereinheit 4 mit den tarifrelevanten Daten sowie das Programm 8 in dem bei der Controlling-Firma 17 stehenden Rechner 7' integriert bzw. zugeordnet sein, und nicht in dem beim Kunden stehenden Rechner 7.

Für die zweite Speichereinheit 5 für die verbrauchsrelevanten Daten steht wiederum die Wahlmöglichkeit frei, diese entweder in der Telekommunikations-Anlage 3, in der Messeinheit 6, z. B. deren konventioneller Meßvorrichtung 6k, aber auch im Rechner 7 des Kunden 1 oder im Rechner 7' der Controlling-Firma 17 anzuordnen bzw. zuzuordnen.

Mit dieser Grundkonstellation ist es möglich, die von den einzelnen Endgeräten 3a,b,c.. aus über unterschiedliche Anbieter 2a, 2b.. durchgeführten TK-Dienstleistungen hinsichtlich ihrer verbrauchsrelevanten Daten aufzuzeichnen und zu einem beliebigen Zeitpunkt, meist dem Ende einer Abrechnungsperiode, mittels des Programmes 8 in Beziehung zu den tarifrelevanten Daten zu setzen und die Simulationsrechnung durchzuführen.

Fig. 1 zeigt ferner die Eingabemöglichkeit am Rechner 7' der Controlling-Firma für die tatsächlichen Rechnungsstellungsdaten, wie sie z. B. von den Anbietern 2a, 2b an den Kunden 1 verschickt werden, und den Vergleicher 10 innerhalb des Rechners 7', um diese Daten mit den Simulationsberechnungsdaten zu vergleichen.

Mit gestrichelten Linien ist in Fig. 1 ferner die Konstellation eingezeichnet, daß die TK-Anlage 3 z. B. zwecks Nutzung der IP-Dienste ein z. B. kundeninternes Rechnernetz, das LAN, umfaßt, wofür ein entsprechendes Bindeglied 19' als Kopplungseinheit notwendig ist.

Die Rechner, z. B. 3'c, dieses LAN sind leitungsgebunden, übertragen die Daten jedoch über das Internet und arbeiten deshalb paketorientiert.

Im Bindeglied 19' des LAN mit der Zentraleinheit der TK-Anlage 6 oder zwischen dem LAN und der Zentraleinheit ist deshalb eine dritte Meßvorrichtung 6iii, die Teil der Meßeinheit 6 ist, vorhanden, die die verbrauchsrelevanten Parameter bei Internetnutzung über das LAN der TK-Anlage sowohl hinsichtlich der paketorientierten Verbindungskosten als auch der paketorientierten Datenkosten ermittelt. Diese Meßvorrichtung 6iii ist daher so positioniert, daß alle Internetverbindungen des leitungsgebundenen Teils der TK-Anlage, also auch des LAN, über diese Meßvorrichtung 6iii laufen.

In der Zentraleinheit des leitungsgebundenen Teils der TK-Anlage ist - neben der konventionellen Meßvorrichtung 6k der Meßeinheit, welche die verbrauchsrelevanten Parameter der verbindungsorientierten Datenübertragungen des leitungs-gebundenen Teils der TK-Anlage 3 ermittelt - auch eine erste Meßvorrichtung 6i untergebracht, welche in der Lage ist, z. B. über die Verbindungsvorrichtung 9, den Rechner 7 und das mit ihm in Verbindung stehende Datennetz 16, etwa das Internet, Verbindung mit dem Rechner des benutzten Anbieters z. B. 2b und dessen Speicher 2bS herzustellen und dort die elektronischen Verbindungsnachweise EVN des Kunden 1 zu übernehmen.

Dabei steht in der Regel jeder Rechner 3'c des LAN-Netzwerks zusammen mit einer bestimmten Nebenstelle 3c der TK-Anlage 3 zusammen ein und demselben Nutzer XY aus dem Hause des Kunden zur Verfügung. Die entsprechenden Korrelationen müssen bekannt und im Rechner 7 verfügbar sein.

Das Mobilfunkgerät 3d ist dagegen beispielsweise einem Nutzer XX als Verursacher zugeordnet. Das Mobilfunkgerät 3d ist ebenfalls Teil der TK-Anlage 3, jedoch des nicht leitungsgebundenen Teils der TK-Anlage. Ein Abgriff der verbrauchsrelevanten Daten ist deshalb in der Zentraleinheit des leitungsgebundenen Teils der TK-Anlage 3 nicht möglich. Entweder werden verbrauchsrelevante Parameter mit Hilfe der ersten Meßvorrichtung 6i wie vorbeschrieben aus den EVNs des Anbieters 2b geholt, und/oder an jedem der nicht leitungsgebundenen Endgeräte 3d befindet sich eine zweite Meßvorrichtung 2i, die direkt am Endgerät die verbrauchsrelevanten Parameter messen und zwischenspeichern, und anschließend - einzeln oder gesammelt, permanent oder in größeren zeitlichen Abständen - mittels Antenne oder mittels Kontakt durch Berührung an den leitungsgebundenen Teil der TK-Anlage 3 abgeben.

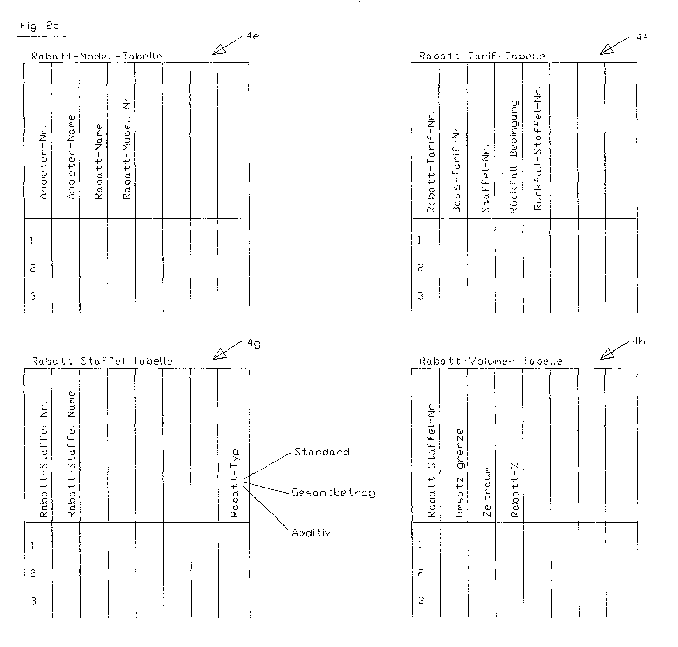

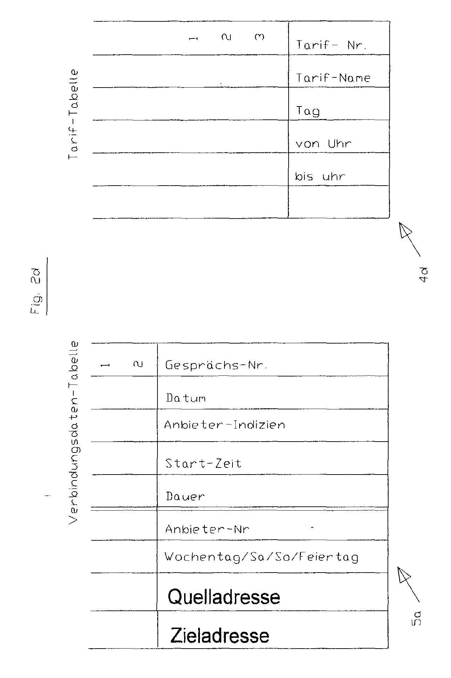

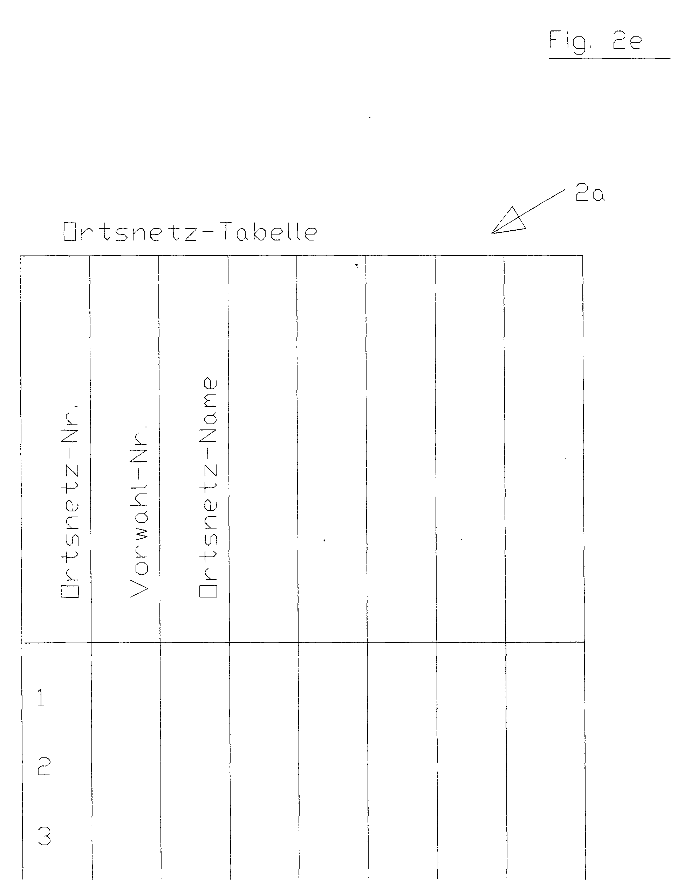

Figuren 2 zeigen Teil-Speichereinheiten des ersten Speichers 4, die primär die anbieterbezogenen Daten enthalten, und vorzugsweise in Form von Tabellen erstellt sind.

In der sogenannten Ortsnetz-Tabelle (Fig. 2e) werden die von der jeweiligen nationalen Telekommunikations-Behörde festgelegten Ortsnetze einschließlich deren Vorwahlnummer und offiziellem Namen, für das Inland und gegebenenfalls auch für das Ausland und für Dienste und Sondernummern jeweils einer bestimmten Ortsnetz-Nummer als Ordnungsnummer zugeordnet.

In der Anbieter-Tabelle 4k (Fig. 2a) werden alle bekannten Anbieter mit ihrem Namen, den jeweils von dem Anbieter angebotenen Tarif (gekennzeichnet durch eine Tarif-Nummer) und zusätzlich einer weiteren Identifikationsziffer VNBkz als dritte Konkordanz sowie der (theoretischen) regionalen und zeitlichen Verfügbarkeit wiederum einer bestimmten Anbieter-Nummer als Ordnungsnummer zugeordnet. Die theoretische zeitliche Verfügbarkeit wird nur in wenigen Stufen angegeben, z. B. "verfügbar/nicht verfügbar/geplant/im Aufbau/verfügbar ab (Datum)".

Sofern eine Praxis-Verfügbarkeit in dieser Tabelle überhaupt geführt ist, was in der Regel nicht der Fall ist, ist diese in Hard-Facts und Soft-Facts, also exakt definierbare und nicht exakt definierbare, Angaben unterteilt. Zu den Hard-Facts zählen dabei die vom Anbieter den Kunden allgemein oder diesem speziellen Kunden zugesicherte Qualitätskriterien seines Services, zu den Soft-Facts dagegen die von der Controllingfirma selbst mit diesem Anbieter gesammelten Praxiserfahrungen.

Die Praxis-Anbieter-Tabelle stellt einen Auszug aus der vorgenannten Anbieter-Tabelle dar, indem in der Praxis-Anbieter-Tabelle nur diejenigen Anbieter bzw. deren Tarife sowie die anderen in der vorgenannten Anbieter-Tabelle enthaltenen Angaben aufgeführt sind, für die auch in der Praxis eine Verfügbarkeit gegeben ist. Dies ist notwendig, da häufig Anbieter sich Lizenzen geben lassen, die noch nicht am Markt sind und damit praktisch nicht verfügbar sind, und teilweise auch niemals praktische Verfügbarkeit erreichen.

Fig. 2b zeigt die das Tarifsystem betreffende Teil-Speichereinheit, wiederum unterteilt in einzelne sogenannte Tabellen:

Die Verzonungs-Tabelle 4b stellt für jede mögliche Kombination von Quell-Ortsnetz-Nummer zu jeder möglichen Ziel-Ortsnetz-Nummer die hierbei geltende Zone klar, und ordnet dies einer Verzonungs-Nummer als Ordnungs-Nummer zu. Dies erfolgt in der Regel für das Inland, das Ausland und Sonderkonstellationen wie etwa grenzüberschreitenden Telefonaten bei grenznahen Quell- und Ziel-Ortsnetz-Nummern. Die Verzonungs-Nummer als Identifikationsmerkmal kann auch in einer eigenen Datei mit zusätzlichen Namen verknüpft und abgelegt sein.

In der Preistabelle (4c) ist jeder einzelne Tarif - kenntlich durch die entsprechende Tarifnummer als Ordnungszahl - definiert hinsichtlich seines Verlaufes durch den jeweiligen Aufschlagpreis, ggfs. die Aufschlagdauer oder der Änderungszeitpunkt bzw. die Änderungs-Zeitdauer, die Taktzeit, den Taktpreis, gegebenenfalls die darauf anfallende Umsatzsteuer und ggfs.die geltende Zeit-Zonen-Wechselregel. Sofern sich die Parameter dabei für z.B. Telefonate und Datenübertragung unterscheiden, sind diese in der Preistabelle 4c als jeweils separate Tarife ausgewiesen.

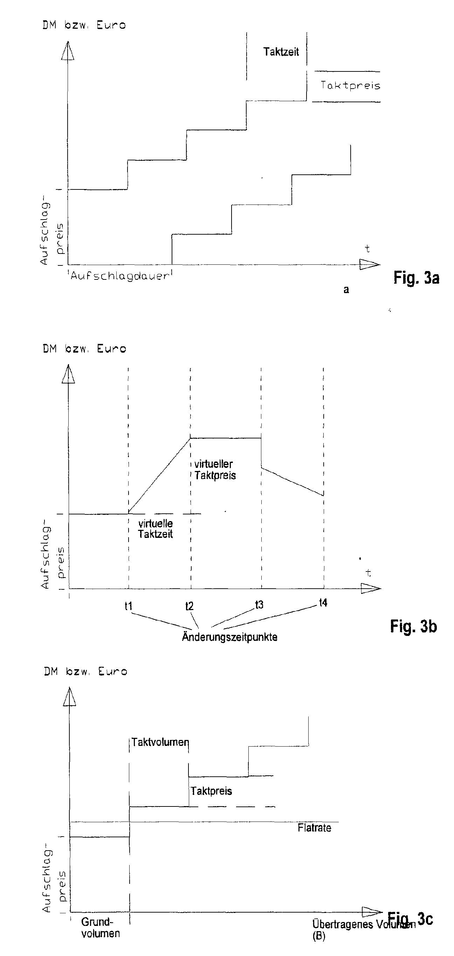

In Fig. 3a ist ein solcher Tarif für verbindungsorientierte Übertragung beispielhaft in einem Preis-Zeit-Diagramm dargestellt.

Dabei ist eben in der Regel kein linearer Zusammenhang zwischen Preis und Zeit gegeben, sondern ein stufenweiser Zusammenhang. Der Beginn der Stufenlinie kann im Nullpunkt liegen, kann jedoch auch auf Abszisse oder Ordinate liegen. Der Startpunkt auf der Zeitkoordinate wird als Aufschlagdauer bezeichnet, ein eventueller Startpunkt auf der Preis-Abszisse als Aufschlagpreis. Die danach folgenden Stufen sind in der Regel hinsichtlich Stufenhöhe (Taktpreis) und Stufenlänge (Taktzeit) gleichbleibend.

Dabei können sich Taktpreis und/oder Taktzeit ab einem gewissen Zeitpunkt, dem Änderungszeitpunkt, beispielsweise aufgrund von Rabattierungs-Regeln, ändern.

Bei einem derartigen Aufbau eines Tarifs ist die virtuelle Nachbildung des Tarifs am Sinnvollsten durch genau die diesen Tarif bestimmenden Faktoren, also Taktpreise, Taktzeiten, Änderungszeitpunkte einschließlich weiterer Taktpreise und Taktzeiten etc.

Da jedoch inzwischen eine Vielzahl von Tarifen existiert, die nach ganz unterschiedlichen Konzepten aufgebaut sind, müssen vergleichsweise viele verschiedene Parameter für die Nachbildung eines realen Tarifes mit all seinen Besonderheiten durch einen virtuellen Tarif gespeichert bzw. weitergegeben werden.

Fig. 3b zeigt daher eine andere Möglichkeit eines virtuellen Tarifs, mit dessen Hilfe es leichter ist, reale Tarife unterschiedlichster Art nachzubilden.

Dabei wird der Verlauf der Preis/Zeit-Kurve durch aneinandergereihte Vektoren beschrieben. Von jedem Vektor müssen bekannt sein:
- der Startpunkt in Form des positiven oder negativen Aufschlagpreises, also die - geometrisch ausgedrückt - Übereinstimmung oder vertikale Abweichung dessen Startpunktes des neuen Vektors gegenüber dem Endpunkt des vorhergehenden Vektors,
- die virtuelle Taktzeit,
- die virtuelle Taktdauer, und
- der Änderungszeitpunkt.

### Vorteil:

Es lassen sich problemlos horizontale Vektoren, vertikale Vektoren, negative vertikale Sprünge und negative Steigungen der Preis/Zeit-Kurve darstellen. Femer wird der erste Takt über die gleichen Faktoren bestimmt wie alle weiteren virtuellen Takte.

Fig. 2d zeigt weiterhin die Tariftabelle 4d, in welcher der Tarifnummer als Ordnungszahl und dem zugehörigen Tarifnamen die zeitliche Gültigkeit, also hinsichtlich Wochentag/Sonn- und Feiertage und der entsprechenden Uhrzeit-Grenzen, abgelegt sind.

Wie Tariftabelle 4d und die Anbietertabelle 4k zeigen, sind im vorliegenden Fall die verschiedenen Anbieter den unterschiedlichen Tarifmodellen zugeordnet. Möglich wäre es auch andersherum, also die verschiedenen vorhandenen Tarifmodelle den einzelnen Anbietern zuzuordnen, was entsprechende Änderungen in der Tariftabelle 4d und der Anbietertabelle 4k zur Folge hätte.

Fig. 2c zeigt die Teil-Speichereinheit mit der ersten Speichereinheit 4 betreffend die Rabatt-relevanten Informationen. Diese sind wiederum in Form einzelner Tabellen abgelegt.

So zeigt die Rabatt-Modell-Tabelle 4e, welcher - durch Anbieternummer und Anbietername definierter - Anbieter welche durch Rabatt-Name und Rabatt-Modell-Nummer (Rabatt-Tarif-Nummer) (also Ordnungszahl) gekennzeichnete Rabatt-Modelle anbietet.

Der Anbietername wird in der Regel an dieser Stelle nicht mehr mitgeführt, da die Korrelation mit der eindeutig definierenden Anbieternummer nur einmal notwendig ist, und im vorstehenden Fall bereits in der Anbietertabelle vorhanden ist.

In der Rabatt-Tarif-Tabelle 4f wird jeder der vorgenannten Rabatt-Tarif-Nummern zugeordnet, welchen Basistarif (nach Nummer und Name) dieser Rabatt-Tarif betrifft, welche Staffel-Nummer dabei benutzt wird, und gegebenenfalls welche Rückfallbedingung (welcher Tarif ohne die Rabattierung gelten würde) zu berücksichtigen ist, identifiziert durch eine Rückfall-Staffel-Nummer.

Die Rabatt-Staffel-Tabelle 4g wiederum ordnet jeder der Rabatt-Modell-Nummern als Ordnungszahl neben dem jeweiligen ausgeschriebenen Namen auch den Typ dieses Rabattes zu, also beispielsweise ein Gesamtbetrags-Rabatt, der sich auf alle bei dem jeweiligen Anbieter oder im jeweiligen Tarif des Anbieters erzielten Umsätze in einer Abrechnungsperiode ergibt, oder ein additiver Rabatt, der innerhalb der jeweiligen Umsatzgrenzen stufenweise unterschiedliche Rabattstufen einräumt etc.

Zusätzlich ist die Rabattmodellnummer angegeben, die verschiedene Varianten (z. B. hinsichtlich Rabattsätze, Randbedingungen etc.) des gleichen Rabatt-Typs (z. B. additiver Rabatt) darstellen kann.

Die Rabatt-Volumen-Tabelle 4h ordnet diesen Rabattstaffelnummern als Ordnungszahl wiederum den für die Anwendung des Rabattes notwendigen Mindest-Umsatz-Betrag zu, den Zeitraum, innerhalb dessen dieser Umsatzbetrag erreicht werden muß, sowie die durch die Rabattierung erzielte Ermäßigung in absoluten Zahlen oder in Prozent.

Fig. 2d zeigt eine Teil-Speichereinheit der zweiten Speichereinheit 5, welche die verbrauchsrelevanten Daten enthält. Dabei ist ebenfalls in Form einer Tabelle, der Verbindungs-Daten-Tabelle 5a, jedes einzelne Telefongespräch bzw. jede einzelne Telekommunikations-Dienstleistung, insbesondere des leitungsgebundenen-Teils der TK-Anlage, gekennzeichnet durch eine sogenannte Gesprächsnummer als Ordnungszahl, beschrieben durch Datum, Startzeit und Dauer dieser TK-Dienstleistung. Der Rechner ermittelt aus dem Datum einerseits den Wochentag (Werktag/Samstag/Sonntag/Feiertag) und trägt dies in der Zeittabelle nach sowie den für das jeweilige Gespräch/Datenübermittlung benutzten Anbieter. Dessen Ermittlung wird ebenfalls vom Rechner zuvor durchgeführt, wobei die Vorgehensweise davon abhängt, welche Informationen die TK-Anlage 3 bzw. deren Meßeinheit 6 hierzu liefert:
- Sofern die an der TK-Anlage verfügbaren Amtsleitungen jeweils einem bestimmten Anbieter fest zugeordnet sind, genügt die Information, welche Amtsleitung benutzt wurde.
- Bei Benutzung der Call-by-Call-Methode, bei der ein wahlfreier Anbieter durch Benutzung einer bestimmten Vorwahlnummer vom Nutzer ausgewählt wird, erfolgt die Ermittlung des benutzten Anbieters über die benutzte Vorwahlnummer.
- Bei Voreinstellung der TK-Anlage auf einen oder mehrere vorher ausgewählte Anbieter (Preselection) muß diese Festlegung des Kunden vorher bekannt und dem Rechner eingegeben sein.
- Der letzte Fall besteht darin, daß die TK-Anlage lediglich ein Index-Signal liefert, aus dem nur mittelbar aber sicher, auf den benutzten Anbieter geschlossen werden kann.

Für die simulative Kontrolle der Telekommunikations-Abrechnung kann diese Zeit-Tabelle Gespräch für Gespräch mittels eines entsprechenden Programms in einzelne Roh-Abrechnungspreise - anhand des zu benutzenden Tarifes des Anbieters - umgerechnet werden, und anschließend unter Berücksichtigung der vorhandenen Rabattierung über eine Abrechnungsperiode der End-Abrechnungspreis ermittelt werden.

Ebenso ist in der Verbindungs-Daten-Tabelle eine Gesprächsnummer als Ordnungszahl nicht zwingend notwendig, sondern dient lediglich der Erleichterung der Datenzuordnung bei den Rechenoperationen.

Jede der Meßvorrichtungen, die verbrauchsrelevante Parameter auch bei paketorientierter Übermittlung ermitteln muß, also des mit dem Internet verbundenen LAN oder eines Internet-fähigen Mobilfunkgerätes 3d, mithin in Fig. 1 die Meßvorrichtungen 6iii oder 6ii, muß bei paketorientierten Datenübertragungen sowohl die Paket-Verbindungskosten der reinen Telekommunikationsverbindung für diese Datenübertragung als auch die paketorientierten Datenkosten selbst, also für die Nutzung oder Übertragung der Daten, messen und erfassen. Während hierbei die Paket-Verbindungskosten mit konventionellen Methoden, also wie die verbrauchsrelevanten Parameter verbindungsorientierter Datenübertragungen wie normaler Telefongespräche erfaßt werden können, ist dies bei den Paket-Datenkosten nicht möglich:

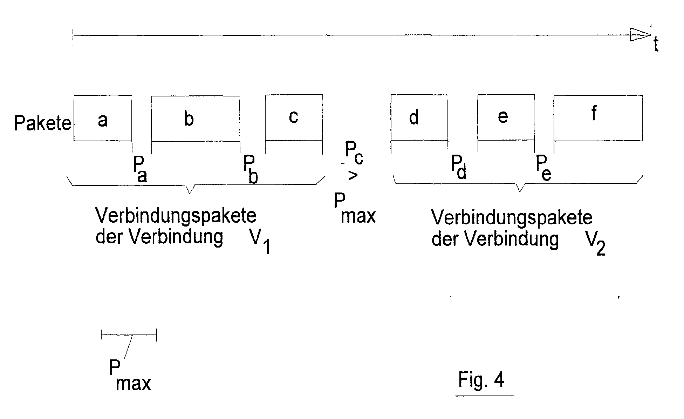

Wie Fig. 4 zeigt, findet eine solche Datenübertragung paketweise in Form von Paketen a, b, c, de, e, f, ... statt, die jeweils eine begrenzte Datenmenge enthalten.

Nach jedem Paket folgt eine kurze zeitliche Pause Pa, Pb, ....

Von der Meßvorrichtung 6ii bzw. 6iii wird dabei die Größe der Datenmenge jedes Paketes sowie Zeitpunkt des Beginns und Zeitpunkt des Endes der Paketübertragung ermittelt, sowie nach Möglichkeit die Art der übertragenen Daten oder wenigstens Indizien hierfür, sowie der hierbei genutzte Dienst (eMail, Internet usw.).

Dies geschieht mit Hilfe des RFC-Formates, insbesondere RFC 2063 und 2064, mittels dessen die Paketübertragung im Internet geregelt ist,.

Zusätzlich werden dabei auch die Längen der Pausen Pa, Pb, Pc, ... ermittelt und mit einer maximalen Pause Pmax verglichen:

Datenpakete, die gemeinsam zu einem einheitlichen Zweck, also Übertragung einer einheitlichen Datei etc. übertragen werden, halten zueinander Pausen ein, die diesen Maximalwert Pmax nicht überschreiten. Derart zusammengehörige Pakete bilden einen sogenannten Flow, dessen Beginn und Ende unter anderem zur Bestimmung der mit der Paket-Übermittlung einhergehenden Verbindungskosten maßgebend sind.

Die Beurteilung der Pausenlänge, die ja über den RFC-Standard hinausgeht, ist auch deshalb notwendig, weil Beginn und Ende eines Flows nicht aus der Tatsache abgeleitet werden kann, daß eine bestimmte Anzahl hintereinander abfolgender Pakete a, b, c, d über gleiche Zieladresse und gleiche Quelladresse verfügt:

Denn beispielsweise kann die Zieladresse der Kunde 1 sein und die Quelladresse die Domainbezeichnung z. B. eines Internetservice-Providers. Der Nutzer kann jedoch innerhalb dieser Domainbezeichnung nacheinander mehrere Dienste (z. B. die eMail-Funktion oder Datenübermittlung nach dem File-Transfer-Protokoll (FTP) dieses Internet-Serviceproviders genutzt haben, und dabei innerhalb des Intemetzuganges wiederum unterschiedliche Unterseiten (Spiele, Datenbanken etc.) aufgesucht haben, die sich in ihren Paketorientierten Datenkosten unterscheiden, und deren Nutzung auch unterschiedliche Flows darstellt, jedoch allein anhand von Quelladresse und Zieladresse nicht unterschieden werden können.

Im Gegensatz zu dem hier notwendigen Vergleich der Pausen Pa, Pb mit einem Maximalwert Pmax kennt der RFC-Standard kein Time-Out, würde also Pakete, die auch mit sehr großen Zeitabstand, beispielsweise an zwei verschiedenen, aufeinander folgenden Tagen, über dieselbe Zieladresse und Quelladresse verfügen, zum selben Flow zuordnen, es sei denn, daß dazwischen Paketübertragungen mit anderer Quelladresse oder Zieladresse erfolgen würden.

Da das Auslesen der Header (die die Zieladresse sowie die Quelladresse enthalten), das sogenannte "Metering" in regelmäßigen Zeuitabständen gemäß dem RFC-Standard erfolgt, das sogenannte "Reading", also Zuordnen der Pakete zu einem Flow, dagegen zum Abfragezeitpunkt, könnte bei Benutzung des nicht erweiterten RFC-Standards folgende Situation eintreten:

Während eines Flows wird zu einem ersten Abfragezeitpunkt gefragt, welche paketorientierten Verbindungen nach z. B. dem IP-Protokoll in dem zurückliegenden Betrachtungszeitraum stattgefunden haben. Einem noch in Arbeit befindlichen Flow würde gemäß RFC-Standard gemeldet werden, beispielsweise mit der Angabe, daß bisher Pakete mit einem Umfang von z. B. 50 MB übertragen wurden.

Bei einer späteren zweiten Abfrage z. B. über eine nachfolgende Betrachtungsperiode würde derselbe Flow, in dessen Rahmen z. B. bis zur tatsächlichen Beendigung 55 MB übermittelt wurden, nochmals, und zwar mit seinem gesamten Umfang von 55 MB, wiederum auftauchen.

Die erfindungsgemäß benutzte Erweiterung bietet dagegen die Möglichkeit
- entweder zum Abfragezeitpunkt jeden noch laufenden Flow künstlich als beendet einzustufen und entsprechend auszuwerfen, damit in einem späteren Betrachtungszeitraum nur noch den Rest dieses Flows auszuwerfen und damit Doppelnennungen zu vermeiden,
- oder zum Abfragezeitpunkt noch laufende Flows grundsätzlich nicht zum Abfragezeitpunkt aufzuführen, sondern erst bei der nächsten Abfrage bzw. dann, wenn der Flow vor dem Abfragezeitpunkt beendet wurde.

Auch die paketorientierten Datenkosten, also die vom Internetserviceprovider berechneten Preise für die übermittelte Datenmenge der Pakete, also der Flows, unterliegt einer Tarifierung durch die Serviceprovider.

Auch hier ist es also notwendig, die real existierenden paketorientierten Datenkosten, die unterschiedlich strukturiert sein können, durch möglichst nur ein einziges virtuelles Tarifmodell abzubilden:

Heute übliche, reale Tarifmodelle dabei sind:
- Flatrate = Fixpreis pro Zeitraum, beispielsweise Monat, ohne Beschränkung der Menge zu übertragender Daten,
- Kontingent-Abrechnung = Bezahlung eines Festpreises pro zu übertragender Menge. Wird diese Grenze überschritten, fällt ein weiterer vollständiger Kontingent-Preis an. Und
- verbrauchsabhängig, also linear mit übertragener Datenmenge steigender Übertragungspreis.

Wie Fig. 3c zeigt, wird diese Tarifierung paketorientierter Datenkosten mit dem gleichen virtuellen Modell abgebildet, wie die verbindungsorientierten Tarife, bis auf die Tatsache, daß auf der Abszisse anstelle der Verbindungszeit das übertragene Volumen, gemessen in Bit, aufgetragen ist.

So besteht die Darstellung einer "Flatrate" aus nur drei Faktoren, nämlich positivem Aufschlagspreis, unendlichem Taktvolumen und einem Taktpreis gleich Null.

Dagegen ist der Übergang zwischen Kontingentabrechnung und verbrauchsabhängiger Abrechnung fließend, denn je kleiner die einzelnen Kontingente hinsichtlich des Kontingent-Volumens werden, um so mehr nähern sie sich einer linear steigenden, verbrauchsabhängigen Abrechnung an. Deshalb werden grobe Kontingentierungs-Abrechnungen virtuell exakt, also durch horizontale und vertikale Vektoren, abgebildet, ein verbrauchsabhängiger, insbesondere linearer, Tarif dagegen virtuell angenähert als sehr fein unterteilte Kontingent-Abrechnung, insbesondere mit einem Kontingent-Volumen von 1 Bit, nachgebildet.

### BEZUGSZEICHENLISTE UND ABKÜRZUNGEN

- 1: Kunde
- 2a,b: Anbieter
- 2b-S: Speicher beim Anbieter
- 3: TK-Anlage
- 4: erste Speichereinheit
- 4a,b: Teil-Speichereinheit
- 5: zweite Speichereinheit
- 6: Messeinheit
- 6i,ii,iii: Meßvorrichtung
- 7: Rechner
- 8: Programm
- 9: Verbindungsvorrichtung
- 10: Vergleicher
- 11a,b: Eingabeeinheit
- 12a,b: Ausgabeeinheit
- 13: Zeit-Messstelle
- 14: Ziel-Messstelle
- 15: Anbieter-Messstelle
- 16: Datennetz
- 17: Controlling-Firma
- 20: externe TK-D Leitung

- PBX: Private-Branch-Exchange
- EVN: elektronische Verbindungsnachweise
- TK-D: Telekommunikations-Dienstleistung
- IP: Internet-Protokoll
- XX, XY, XZ: Verursacher
- Pmax: maximale Pause

## Patentansprüche

1. Verfahren zur automatischen simulativen Berechnung des gesamten Abrechnungspreises der von einem Kunden (1) bei wenigstens einem Anbieter (2a, b...) in Anspruch genommenen Telekommunikations-Dienstleistungen (TK-D) unterschiedlicher Übermittlungs-Arten (zum Beispiel verbindungsorientiert oder paketorientiert) und/oder Übermittlungswege (zum Beispiel leitungsgebunden oder nicht leitungsgebunden) durch
- Beschaffung der jeweiligen verbrauchsrelevanten Parameter und
- Berücksichtigung der in wenigstens einem Tarifvertrag zwischen Kunden und Anbieter vereinbarten tarifrelevanten Parameter sowie
- Verknüpfung der verbrauchsrelevanten Parameter mit den tarifrelevanten Parametern zur Ermittlung des Abrechnungspreises
**dadurch gekennzeichnet, daß**
- wenigstens Indizien hinsichtlich des benutzten Anbieters (2a, ....) der in Anspruch genommenen (TK-D) ermittelt werden und
- die verbrauchsrelevanten Parameter für die unterschiedlichen Übertragungs-Arten und Übertragungs-Wege im jeweiligen Übertragungsweg so nahe wie möglich am Kunden (1) beschafft, insbesondere ermittelt, werden.

2. Verfahren zur automatischen simulativen Berechnung des gesamten Abrechnungspreises der von einem Kunden (1) bei wenigstens einem Anbieter (2a, b...) in Anspruch genommenen Telekommunikations-Dienstleistungen (TK-D) unterschiedlicher Übermittlungs-Arten (zum Beispiel verbindungsorientiert oder paketorientiert) und/oder Übermittlungswege (zum Beispiel leitungsgebunden oder nicht leitungsgebunden) durch
- Beschaffung der jeweiligen verbrauchsrelevanten Parameter und
- Berücksichtigung der in wenigstens einem Tarifvertrag zwischen Kunden und Anbieter vereinbarten tarifrelevanten Parameter sowie
- Verknüpfung der verbrauchsrelevanten Parameter mit den tarifrelevanten Parametern zur Ermittlung des Abrechnungspreises
**dadurch gekennzeichnet, daß**
- wenigstens Indizien hinsichtlich des benutzten Anbieters (2a, ....) der in Anspruch genommenen (TK-D) ermittelt werden und
- die verbrauchsrelevanten Parameter für die unterschiedlichen Übertragungsarten und Übertragungs-Wege so ermittelt werden, daß sie möglichst wenig, insbesondere überhaupt nicht, dem Einfluß des jeweiligen Anbieters unterliegen.

3. Verfahren zur automatischen simulativen Berechnung des gesamten Abrechnungspreises der von einem Kunden (1) bei wenigstens einem Anbieter (2a, b...) in Anspruch genommenen Telekommunikations-Dienstleistungen (TK-D) unterschiedlicher Übermittlungs-Arten (zum Beispiel verbindungsorientiert oder paketorientiert) und/oder Übermittlungswege (zum Beispiel leitungsgebunden oder nicht leitungsgebunden) durch
- Beschaffung der jeweiligen verbrauchsrelevanten Parameter und
- Berücksichtigung der in wenigstens einem Tarifvertrag zwischen Kunden und Anbieter vereinbarten tarifrelevanten Parameter sowie
- Verknüpfung der verbrauchsrelevanten Parameter mit den tarifrelevanten Parametern zur Ermittlung des Abrechnungspreises
**dadurch gekennzeichnet, daß**
- wenigstens Indizien hinsichtlich des benutzten Anbieters (2a, ....) der in Anspruch genommenen (TK-D) ermittelt werden und
- die verbrauchsrelevanten Parameter für die unterschiedlichen Übertragungs-Arten und Übertragungs-Wege auf der kundenseitigen Seite der Firewall, die im Verbindungsstrang des Kunden nach außen positioniert ist, beschafft, insbesondere ermittelt, werden.

4. Verfahren nach einem der vorhergehenden Ansprüche,
**dadurch gekennzeichnet, daß**
die verbrauchsrelevanten Parameter getrennt für die unterschiedlichen Übertragungs-Arten und Übertragungs-Wege im jeweiligen Übertragungsweg so nahe wie möglich am Kunden (1) beschafft, insbesondere ermittelt, werden.

5. Verfahren nach einem der vorhergehenden Ansprüche,
**dadurch gekennzeichnet, daß**
- der ermittelte gesamte Abrechnungspreis automatisch den einzelnen Verursachem (zum Beispiel Mitarbeitern, Kostenstellen, Arbeitsplätzen etc.) innerhalb des Kunden (1) zugeordnet, insbesondere aufgeteilt nach den jeweiligen Übermittlungs-Wegen und Übermittlungs-Arten zugeordnet, werden, und insbesondere
- sowohl leitungsgebundene als auch nicht leitungsgebundene Nebenstellen der TK-Anlage (3) des Kunden eindeutig einem Kunden-internen Verursacher zugeordnet sind und diese Zuordnung insbesondere ständig aktualisiert wird.

6. Verfahren nach einem der vorhergehenden Ansprüche,
**dadurch gekennzeichnet, daß**
bei nicht leitungsgebundenem, verbindungsorientiertem Übermittlungsweg die verbrauchsrelevanten Parameter den elektronischen Verbindungsnachweisen (EVNs) des Anbieters für diesen Kunden (1) automatisch entnommen werden.

7. Verfahren nach einem der vorhergehenden Ansprüche,
**dadurch gekennzeichnet, daß**
bei nicht leitungsgebundener, verbindungsorientierter Übermittlung die verbrauchsrelevanten Parameter, insbesondere
- Zeitpunkt und Dauer,
- verantwortliche Nebenstelle der TK-Anlage,
- wenigstens das Zielortsnetz, insbesondere die Ziel-Rufnummer, in der drahtlosen Nebenstelle der TK-Anlage (3) des Kunden (1) ermittelt und/oder
- insbesondere nach Zwischenspeicherung
- automatisch zum drahtgebundenen Teil der TK-Anlage (3) übermittelt werden.

8. Verfahren nach einem der vorhergehenden Ansprüche,
**dadurch gekennzeichnet, daß**
- bei paketorientierter Übertragungsart verbrauchsrelevante Parameter sowohl hinsichtlich der Verbindung (paketorientierte Verbindungskosten) als auch der Daten (paketorientierte Datenkosten) ermittelt werden, und insbesondere
- die verbrauchsrelevanten Parameter hinsichtlich der Paketorientierten Verbindungskosten ermittelt werden unter Bestimmung der eine Einzelverbindung umfassenden Pakete (Verbindungs-Pakete).

9. Verfahren nach einem der vorhergehenden Ansprüche,
**dadurch gekennzeichnet, daß**
als verbrauchsrelevante Parameter hinsichtlich der Paketorientierten Datenkosten, insbesondere der Kosten des gesamten Verbindungs-Paketes, insbesondere
- die in dem einzelnen Paket oder im gesamten Verbindungspaket enthaltene Datenmenge,
- die dabei genutzte Dienste-Art (zum Bespiel e-mail, FTP, Internet-Protokoll), und/oder
- die Art des Inhalts der in den Paketen übermittelten Daten ermittelt wird, und insbesondere
- bei paketorientierter Übermittlung die verbrauchsrelevanten Parameter hinsichtlich der paketorientierten Datenkosten
- bei Verwendung eines Routers aus den Event-Detail-Records des Routers entnommen
oder
- bei Verwendung einer Einsteckkarte in der Zentraleinheit einer Telekommunikationsanlage mittels der Einsteckkarte die verbrauchsrelevanten Parameter bezüglich des Paketes ermittelt werden
oder
- bei Fehlen eines Routers oder einer Einsteckkarte die verbrauchsrelevanten Parameter bezüglich der paketorientierten Datenkosten innerhalb des dem Internet-Protokoll (IP) unterliegenden Teils der Telekommunikationsanlage (3) ermittelt werden, insbesondere an einer IP-Messeinheit insbesondere innerhalb der Telekommunikationsanlage (3).

10. Verfahren nach einem der vorhergehenden Ansprüche,
**dadurch gekennzeichnet, daß**
diejenigen Pakete und die ihnen zugeordneten verbrauchsrelevanten Parameter als zusammengehörige Verbindungs-Pakete behandelt werden, die
- gleiche Quelladresse
- gleiche Zieladresse aufweisen und
- zeitlich sich so aneinander anschließen, daß die Pausen zwischen den einzelnen Paketen einen vorgegebenen Maximalwert (Pmax) nicht überschreiten, und insbesondere
- diejenigen Pakete und die ihnen zugeordneten verbrauchsrelevanten Parameter als zusammengehörige Verbindungs-Pakete behandelt werden, deren Daten der gleichen Dienste-Art (z. B. eMail, FTP, TCP) angehören.

11. Verfahren nach einem der vorhergehenden Ansprüche,
**dadurch gekennzeichnet, dass**
bei der simulativen Berechnung der paketorientierten Kosten, insbesondere Verbindungskosten, auch die für den leitungsgebundenen Teil der TK-D benutzte Amtsleitung mit ermittelt wird.

12. Verfahren nach einem der vorhergehenden Ansprüche,
**dadurch gekennzeichnet, dass**
die Berechnung des Abrechnungspreises für ganze Abrechnungsperioden, insbesondere die für nachträgliche Rabattierungen relevanten Abrechnungsperioden, erfolgt.

13. Verfahren nach einem der vorhergehenden Verfahrensansprüche,
**dadurch gekennzeichnet, dass**
wenigstens die tarifrelevanten Parameter in Form einer Datenbank in dem Speicher einer EDV abgelegt werden, und insbesondere auch die vertragsrelevanten Daten, und die Verknüpfungen von beiden mittels eines in einer EDV gespeicherten Programmes durchgeführt wird.

14. Verfahren nach einem der vorhergehenden Verfahrensansprüche,
**dadurch gekennzeichnet, dass**
- zunächst ein Roh-Abrechnungspreis ohne Berücksichtigung von Rabattierungen ermittelt wird und anschließend, insbesondere über eine gesamte Abrechnungsperiode, beispielsweise einen Monat, die nachträgliche Rabattierung ermittelt und vom Roh-Abrechnungspreis zwecks Ermittlung des End-Abrechnungspreises abgezogen wird und insbesondere
- die Ermittlung des Roh-Abrechnungspreises zeitgleich bzw. zeitnah nach Beendigung der jeweiligen in Anspruch genommenen TK-D durchgeführt wird, und insbesondere
- die verbrauchsrelevanten Daten von der Messeinheit (6) der Telekommunikations-Anlage (3) periodisch oder auf Abruf durch den zugeordneten Rechner (7) an diesen übermittelt werden und insbesondere
- der simulativ berechnete Abrechnungspreis mit dem tatsächlich in Rechnung gestellten Abrechnungspreis verglichen wird.

15. Verfahren nach einem der vorhergehenden Verfahrensansprüche,
**dadurch gekennzeichnet, dass**
- die tarifrelevanten Parameter in Form korrelierter Datenbanken, insbesondere Anbieterdatenbanken, Tarifdatenbanken und Rabattdatenbanken, gespeichert werden und insbesondere
- die Tarifdatenbank eine Teil-Datenbank (4a) in Form einer Ortsnetztabelle umfaßt, in der die Zuordnung der einzelnen Orte zu den einzelnen Ortsnetzen abgelegt ist.

16. Simulationsvorrichtung zur automatischen simulativen Berechnung des gesamten Abrechnungspreises der von einem Kunden (1) bei wenigstens einem Anbieter (2a, b...) in Anspruch genommenen Telekommunikations-Dienstleistungen (TK-D) unterschiedlicher Übermittlungs-Arten (zum Beispiel verbindungsorientiert oder paketorientiert) und/oder Übermittlungswege (zum Beispiel leitungsgebunden oder nicht leitungsgebunden) mit
- einer Telekommunikations-Anlage (3) des Kunden (1)
- einer ersten Speichereinheit (4) zur Speicherung der tarifrelevanten Parameter,
- wenigstens einer Meßeinheit (6) zur Erfassung der verbrauchsrelevanten Parameter,
- einer zweiten Speichereinheit (5) zum Zwischenspeichern der verbrauchsrelevanten Parameter,
- einem Rechner (7) mit einem Programm (8) zur Verknüpfung der tarifrelevanten Parameter mit den verbrauchsrelevanten Parametern,
- einer Verbindungsvorrichtung (9) zur Verbindung der Meßeinheit (6) mit einem Rechner (7),
- wenigstens einer Eingabeeinheit (11) zur Eingabe der tarifrelevanten Parameter,
- wenigstens einer Ausgabeeinheit (12) zur Ausgabe der verbrauchsrelevanten Parameter und/oder des Ergebnisses der simulativen Berechnung,
wobei
- die Meßeinheit (6) eine erste Meßvorrichtung (6i) umfaßt, die in der Lage ist, automatisch Verbindung mit dem Speicher für elektronische Verbindungsnachweise bei einem beteiligten Anbieter (2a, ...) aufzunehmen und die elektronischen Verbindungsnachweise des Kunden (1) zu übernehmen
und/oder
- eine zweite Meßvorrichtung (6ii) an den nicht leitungsgebundenen Endgeräten (3d) der TK-Anlage (3) umfaßt zur Erfassung und Zwischenspeicherung der verbrauchsrelevanten Parameter dieses Endgerätes (3d) zur Bestimmung der verbrauchsrelevanten Parameter wenigstens der nicht leitungsgebundenen, verbindungsorientierten TK-Ds, insbesondere auch der nicht leistungsgebundenen, paketorientierten TK-Ds.

17. Simulationsvorrichtung zur automatischen simulativen Berechnung des gesamten Abrechnungspreises der von einem Kunden (1) bei wenigstens einem Anbieter (2a, b...) in Anspruch genommenen Telekommunikations-Dienstleistungen (TK-D) unterschiedlicher Übermittlungs-Arten (zum Beispiel verbindungsorientiert oder paketorientiert) oder Übermittlungswege (zum Beispiel leitungsgebunden oder nicht leitungsgebunden) mit
- einer Telekommunikations-Anlage (3) des Kunden (1),
- einer ersten Speichereinheit (4) zur Speicherung der tarifrelevanten Parameter,
- wenigstens einer Meßeinheit (6) zur Erfassung der verbrauchsrelevanten Parameter,
- einer zweiten Speichereinheit (5) zum Zwischenspeichern der verbrauchsrelevanten Parameter,
- einem Rechner (7) mit einem Programm (8) zur Verknüpfung der tarifrelevanten Parameter mit den verbrauchsrelevanten Parametern,
- einer Verbindungsvorrichtung (9) zur Verbindung der Meßeinheit (6) mit einem Rechner (7),
- wenigstens einer Eingabeeinheit (11) zur Eingabe der tarifrelevanten Parameter,
- wenigstens einer Ausgabeeinheit (12) zur Ausgabe der verbrauchsrelevanten Parameter und/oder des Ergebnisses der simulativen Berechnung,
wobei
- die Meßeinheit (6) eine dritte Meßvorrichtung (6iii) in dem dem Internet-Protokoll unterliegenden Teil (3-IP) der Telekommunikations-Anlage (3) umfaßt zur Ermittlung der verbrauchsrelevanten Parameter bezüglich der Paketkosten von paketorientierten TK-Ds.

18. Vorrichtung nach Anspruch 16 oder 17,
**dadurch gekennzeichnet, dass**
die Messeinheit (6)
- eine Zeit-Messstelle (13) zur Erfassung von Zeitpunkt und Dauer der TK-D
- eine Ziel-Messstelle (14) zur Erfassung der Ziel-Rufnummer der TK-D und
- eine Anbieter-Messstelle (15) zur Erfassung des Anbieters der TK-D umfasst, und insbesondere
- die erste Speichereinheit (4) die tarifrelevanten Parameter in Form mehrerer getrennter Teil-Speichereinheiten (4a,b..) (Tabellen) enthält und das Programm (8) Programmteile zur Verknüpfung dieser Tabellen aufweist und insbesondere
- die erste Speichereinheit (4) am Rechner (7) angeordnet ist und insbesondere
- die zweite Speichereinheit (5) am Rechner (7) angeordnet ist, und insbesondere
- die Verbindungsvorrichtung (9) Teil eines bezüglich des Kunden (1) firmeninternen bzw. firmenexternen Datennetzes (16) ist.

19. Vorrichtung nach einem der vorhergehenden Vorrichtungsansprüche,
**dadurch gekennzeichnet, dass**
die zweite Speichereinheit (5) an der Telekommunikationsanlage (3) angeordnet ist.

20. Vorrichtung nach einem der vorhergehenden Vorrichtungsansprüche, **dadurch gekennzeichnet, dass**
- wenigstens eine Eingabeeinheit (11b) und wenigstens eine Ausgabeeinheit (12b) beim Kunden (1) angeordnet sind und hierüber der Kunde jederzeit das momentane Ergebnis der simulativen Berechnungen abfragen kann und insbesondere
- der Rechner (7) sowie die erste Speichereinheit (4) bei einer Controlling-Firma (17) angeordnet sind.

21. Vorrichtung nach einem der vorhergehenden Vorrichtungsansprüche,
**dadurch gekennzeichnet, dass**
- die erste Speichereinheit (4) eine erste Teil-Speichereinheit (4a) in Form einer Ortsnetztabelle umfaßt, welche für die diversen Vorwahlnummern im Inland, ggf. im Ausland sowie für TK-Dienste und Sondernummern jeweils eine Ortsnetznummer als Ordnungsnummer zuordnet und insbesondere
- die erste Speichereinheit (4) eine Teil-Speichereinheit (4b) in Form einer Verzonungstabelle umfaßt, in der jeder möglichen Kombination von Quell-Ortsnetznummer und Ziel-Ortsnetznummer die entsprechende Zone sowie eine Verzonungsnummer als Ordnungszahl zugeordnet ist.

22. Vorrichtung nach einem der vorhergehenden Vorrichtungsansprüche,
**dadurch gekennzeichnet, dass**
die erste Speichereinheit (4) eine Teil-Speichereinheit (4c) in Form einer Preistabelle für Sprach-TK-D umfaßt, in welcher für jede Tarifnummer wenigstens der Aufschlagpreis, die Aufschlagdauer, die Taktzeit und der Taktpreis, insbesondere auch die zu entrichtende Umsatzsteuer, eine Zonen-Wechselregel, und ggf. der Tarifname hinterlegt ist.

23. Vorrichtung nach einem der vorhergehenden Vorrichtungsansprüche,
**dadurch gekennzeichnet, dass**
die erste Speichereinheit (4) eine Teil-Speichereinheit (4c) in Form einer Preistabelle für Daten-und/oderTK-D umfaßt, in welcher für jede Tarifnummer wenigstens der Aufschlagpreis, die virtuelle Taktzeit und der virtuelle Taktpreis, insbesondere auch die zu entrichtende Umsatzsteuer und ggf. der Tarifname hinterlegt ist.

24. Vorrichtung nach einem der vorhergehenden Vorrichtungsansprüche, **dadurch gekennzeichnet, dass**
- die erste Speichereinheit (4) eine Teil-Speichereinheit (4d) in Form einer Tariftabelle umfaßt, in welcher für jede Tarifnummer die zeitliche Gültigkeit, insbesondere hinsichtlich Wochentag und Uhrzeit, ggf. auch hinsichtlich von Feiertagen, hinterlegt ist und insbesondere
- die erste Speichereinheit (4) eine Teil-Speichereinheit (4e) in Form einer Rabatt-Modell-Tabelle umfaßt, in der für jeden Anbieter die jeweils vorhandenen Rabatt-Modell-Nummern angegeben sind.

25. Vorrichtung nach einem der vorhergehenden Vorrichtungsansprüche,
**dadurch gekennzeichnet, dass**
- die erste Speichereinheit (4) eine Teil-Speichereinheit (4f) in Form einer Rabatt-Tarif-Tabelle umfaßt, in der den einzelnen Rabatt-Tarif-Nummern als Ordnungszahl, der jeweils der zugrundeliegende Basistarif, eine Rabatt-Staffel-Nummer und ggf. eine Rückfallbedingung zugeordnet sind und insbesondere
- die erste Speichereinheit (4) eine Teil-Speichereinheit (4g) in Form einer Rabatt-Staffel-Tabelle umfaßt, in der jeder Rabatt-Staffel-Nummer als Ordnungszahl der entsprechende Rabatttypus, z. B. additiver Rabatt, Gesamtbetragsrabatt etc. zugeordnet ist.

26. Vorrichtung nach einem der vorhergehenden Vorrichtungsansprüche,
**dadurch gekennzeichnet, dass**
- die erste Speichereinheit (4) eine Teil-Speichereinheit (4h) in Form einer Rabatt-Volumen-Tabelle umfaßt, in der jeder Rabatt-Staffel-Nummer das Rabattvolumen, beispielsweise in Prozent, der hierfür notwendige Mindest-Umsatz-Betrag sowie der maximale Zeitraum, in dem dieser Umsatzbetrag erzielt werden muß, zugeordnet sind und insbesondere
- die erste Speichereinheit (4) eine Teil-Speichereinheit (4i) in Form einer Anbietertabelle umfaßt, in der für jeden Anbieter die vom Anbieter gebotenen Tarifnummern, die Verfügbarkeit in regionaler und zeitlicher Hinsicht sowie die Verfügbarkeit in der Praxis hinterlegt sind und insbesondere
- die Teil-Speichereinheit (4i') in Form einer Praxis-Anbieter-Tabelle umfaßt, die Teil der Anbieter-Tabelle ist und nur die in der Praxis auch verfügbaren Anbieter bzw. deren Tarife umfaßt.

27. Vorrichtung nach einem der vorhergehenden Ansprüche,
**dadurch gekennzeichnet, dass**
die zweite Speichereinheit (5) die verbrauchsrelevanten Daten in Form wenigstens einer Teil-Speichereinheit in Form einer Verbindungs-Daten-Tabelle umfaßt, in welcher jeder einzelnen geführten Telekommunikations-Dienstleistung in Form einer Gesprächsnummer als Ordnungszahl Dauer und Zeitpunkt, insbesondere Start-Zeitpunkt, insbesondere unterschieden nach Datum, Wochentag, Feiertag etc., sowie insbesondere die Quell- und Zieladresse zugeordnet ist.
